# EUROPEAN PATENT SPECIFICATION

(11) **EP 4 270 603 B1**
(45) Date of publication and mention of the grant of the patent: **28.01.2026**
(21) Application number: 22858751.5
(22) Date of filing: 17.08.2022
(51) Int. Cl.: H01M 10/6553, H01M 10/647, H01M 10/613, H01M 10/653, H01M 50/502, H01M 50/211, H01M 10/6554, H01M 10/6555, H01M 50/20, H01M 50/204

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 20.08.2021 KR 20210109847
(43) Date of publication of application: 01.11.2023
(73) Proprietor: LG Energy Solution, Ltd., Seoul 07335 (KR)
(72) Inventor: KIM, Min Seop, Daejeon 34122 (KR); SEONG, Junyeob, Daejeon 34122 (KR); JEON, Jongpil, Daejeon 34122 (KR)
(74) Representative: Plasseraud IP
(86) International application number: PCT/KR2022/012287
(87) International publication number: WO 2023/022514

(56) References cited:
- EP-A1- 4 270 602
- JP-A- 2005 310 449
- KR-A- 20210 019 295
- KR-A- 20210 042 710
- KR-A- 20210 064 935
- KR-A- 20210 065 268
- KR-A- 20210 066 528
- KR-A- 20210 066 528

## Description

### [TECHNICAL FIELD]

### Cross Citation with Related Application(s)

This application claims the benefit of Korean Patent Application No. 10-2021-0109847 filed on August 20, 2021 with the Korean Intellectual Property Office.

The present disclosure relates to a battery module and a battery pack including the same, and more particularly to a battery module having a novel cooling structure and a battery pack including the same.

### [BACKGROUND]

Along with the technology development and increased demand for mobile devices, the demand for batteries as energy sources is increasing rapidly. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Small-sized mobile devices use one or several battery cells for each device, whereas middle or large-sized devices such as vehicles require high power and large capacity. Therefore, a middle or large-sized battery module having a plurality of battery cells electrically connected to one another is used.

The middle or large-sized battery module is preferably manufactured so as to have as small a size and weight as possible. Consequently, a prismatic battery, a pouch-shaped battery or the like, which can be stacked with high integration and has a small weight relative to capacity, is mainly used as a battery cell of the middle or large-sized battery module. Such a battery module has a structure in which a plurality of cell assemblies including a plurality of unit battery cells are connected in series to obtain high output. And, the battery cell includes positive and negative current collectors, a separator, an active material, an electrolyte, and the like, and thus can be repeatedly charged and discharged through an electrochemical reaction between components.

Meanwhile, in recent years, as the need for large-capacity structures including their utilization as an energy storage source is growing, there is an increasing demand for battery packs having a multi-module structure formed by assembling a plurality of battery modules in which a plurality of secondary batteries are connected in series and/or in parallel.

Meanwhile, when a plurality of battery cells are connected in series or in parallel to configure a battery pack, it is common to configure a battery module composed of at least one battery cell first and then configure a battery pack by using at least one battery module and adding other components.

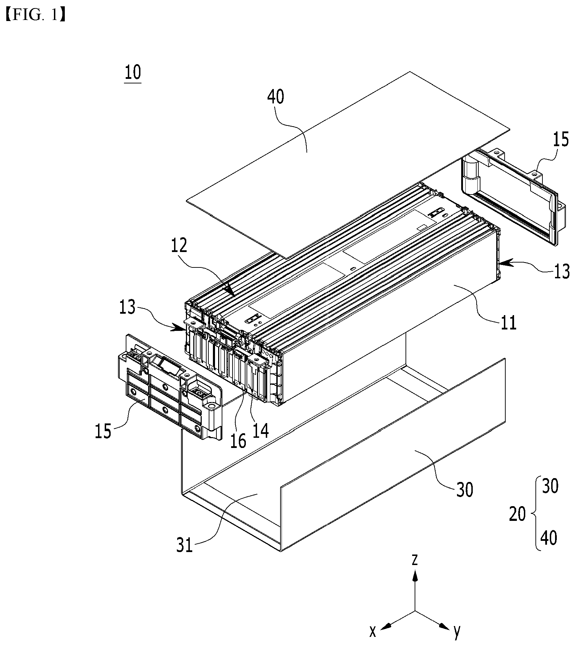

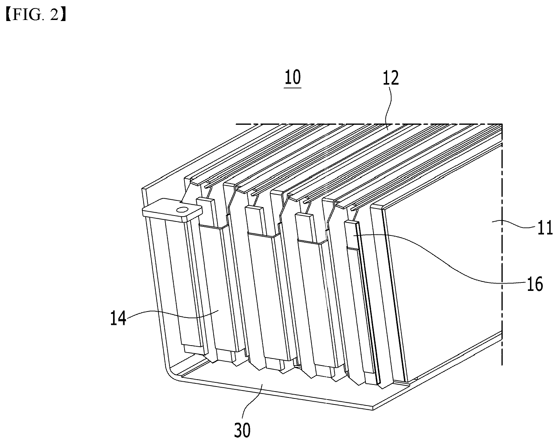

Fig. 1 shows an exploded perspective view according to a conventional battery module. Fig. 2 shows a partial cross-sectional view of the battery module of Fig. 1.

Referring to Figs. 1 and 2, the conventional battery module 10 includes a battery cell stack 12 in which a plurality of battery cells 11 are stacked and a module frame 20 that houses the battery cell stack 12. At this time, the module frame 20 may include a U-shaped module frame 30 that covers the side surfaces and the lower part of the battery cell stack 12, and an upper plate 40 that covers the upper side surface of the battery cell stack. In addition, the battery module 10 includes end plates 15 that cover the front and rear surfaces of the battery cell stack 12, and a busbar assembly for electrically connecting the electrode leads 14 of the plurality of battery cells 11 may be formed between the battery cell stack 12 and the end plate 15.

Here, the busbar assembly is constituted so as to include a busbar frame 13 through which the electrode leads 14 of each battery cell 11 pass, and a busbar 16 mounted on the busbar frame 13 and connected to the electrode leads 14 passing through the busbar frame 13 by welding or the like.

At this time, since the heat generated from the busbar 16 does not have a direct cooling path, it may be transferred through the electrode leads 14, and transferred through the battery cell 11, the thermal conductive resin layer 31 formed on the bottom part of the module frame 20, and the bottom part of the module frame 20.

However, in recent years, the need for high capacity, high energy, fast charging, and the like is continuously increasing, and the amount of current flowing through the busbar also tends to increase. Thus, heat generation occurs in the busbar due to the high current flowing through the busbar, and it is difficult to effectively cool such a heat generation through a conventional cooling structure alone. Therefore, there is a need for a novel structure that can directly contact the busbar and cool the busbar in order to cool the heat generated.

Further prior art is disclosed in KR 2021 0066528 A and EP 4 270 602 A1.

### [DETAILED DESCRIPTION OF THE INVENTION]

### [Technical Problem]

It is an object of the present disclosure to provide a battery module that can solve the heat generation problem of a busbar and a battery pack including the same.

However, the objects of the present disclosure are not limited to the aforementioned objects, and other objects which are not mentioned herein should be clearly understood by those skilled in the art from the following detailed description and the accompanying drawings.

### [Technical Solution]

This object is accomplished with a battery module comprising the features of claim 1.

Dependent claims refer to preferred embodiments of the invention.

### [Advantageous Effects]

The battery module according to one embodiment of the present disclosure has a novel form of busbar cooling structure and thus can solve the problem of busbar heat generation in a high current and fast charging environment. In addition, the stability of the battery module can be enhanced by solving the heat generation problem.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 shows an exploded perspective view according to a conventional battery module;
Fig. 2 shows a partial cross-sectional view of the battery module of Fig. 1;
Fig. 3 is a perspective view of a battery module according to an embodiment of the present disclosure;
Fig. 4 is a diagram which enlarges and shows a state of cutting along the yz plane and cutting along the P1 plane with reference to the cutting line A-A' in Fig. 3;
Fig. 5 is a perspective view illustrating a first heat transfer member of the present disclosure;
Fig. 6 is a view showing a coupling relationship of partial components of the present disclosure;
Fig. 7 is a perspective view showing partial components of a battery module according to another embodiment of the present disclosure;
Fig. 8 is a perspective view showing partial components of a battery module according to the present invention as defined by the annexed claim 1; and
Fig. 9 is a cross-sectional view which shows a cross section taken along plane P2 of Fig. 8.

### [DETAILED DESCRIPTION OF THE EMBODIMENT]

Hereinafter, an embodiment of the present disclosure will be described in detail with reference to the accompanying drawings so that those skilled in the art can easily carry out the same.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

The terms "first," "second," etc. are used to explain various components, but the components should not be limited by the terms. These terms are only used to distinguish one component from the other component.

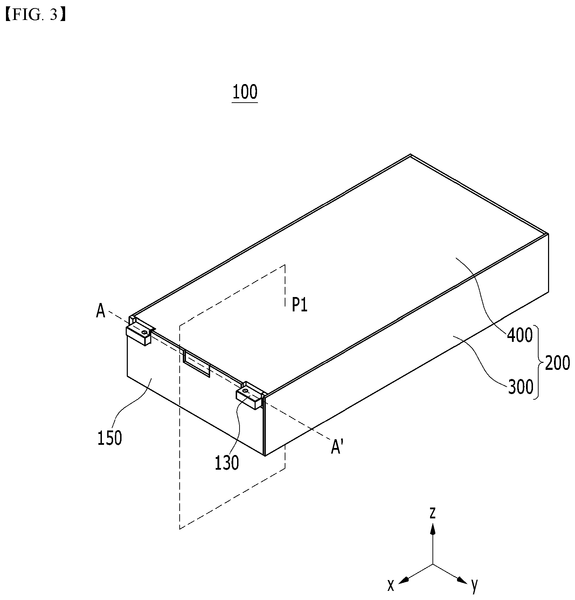

Hereinafter, a battery module according to an embodiment of the present disclosure will be described with reference to Figs. 3 to 6.

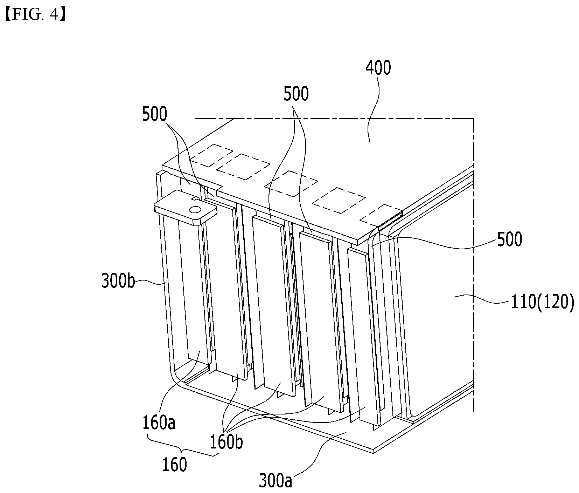

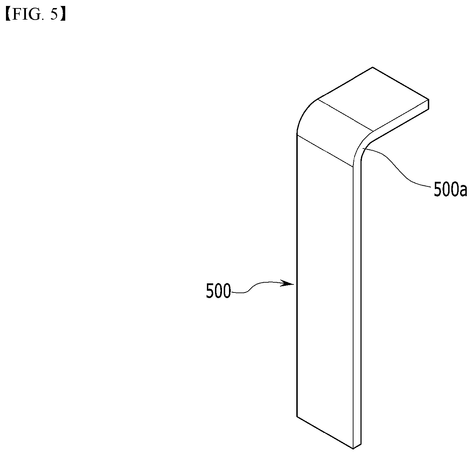

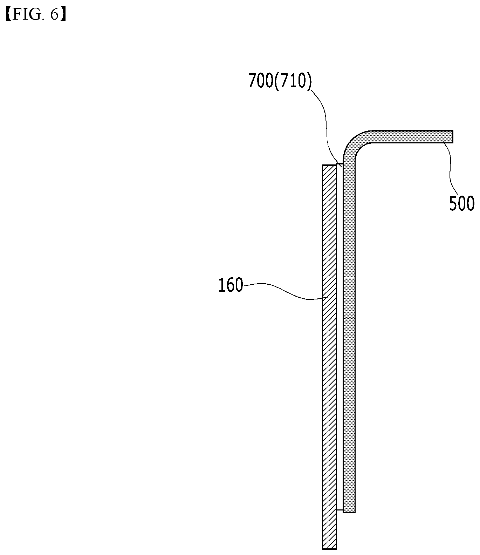

Fig. 3 is a perspective view of a battery module according to an embodiment of the present disclosure. Fig. 4 is a diagram which enlarges and shows a state of cutting along the yz plane and cutting along the P1 plane with reference to the cutting line A-A' in Fig. 3. Fig. 5 is a perspective view illustrating a first heat transfer member of the present disclosure. Fig. 6 is a view showing a coupling relationship of partial components of the present disclosure.

Referring to Figs. 3 and 4, a battery module 100 according to an embodiment of the present disclosure includes a battery cell stack 120 in which a plurality of battery cells 110 are stacked, a module frame 200 that surrounds the battery cell stack 120, and a busbar 160 connected to the electrode lead 140 protruding from the battery cell 110.

The battery cell 110 is a secondary battery and can be configured into a pouch-type secondary battery. The battery cells 110 are configured in plural numbers, and the plurality of battery cells 110 are mutually stacked so as to be electrically connected to each other, thereby forming a battery cell stack 120 and forming a cell assembly including the battery cell stack 120. The plurality of battery cells 110 include an electrode assembly, a cell case, and an electrode lead 140 protruding from the electrode assembly, respectively.

The module frame 200 includes a frame member 300 which is opened in the upper surface, the front surface and the rear surface thereof and covers the lower part and both side surfaces of the battery cell stack 120, and an upper plate 400 that covers an upper part of the battery cell stack 120. However, the module frame 200 is not limited thereto, and can be replaced with a frame having another shape such as an L-shaped frame or a mono-frame surrounding the battery cell stack 120 except the front and rear surfaces. The battery cell stack 120 housed inside the module frame 200 can be physically protected through the module frame 200. At this time, the frame member 300 includes a bottom part 300a that supports the lower part of the battery cell stack 120, and side surface parts 300b each extending upward from both ends of the frame bottom part 300a.

The upper plate 400 covers the opened upper side surface of the module frame 200. The end plates 150 cover the front and rear surfaces of the battery cell stack 120 that are opened in the module frame 200. The end plate 150 can be weld-coupled with the front and rear edges of the upper plate 400 and the front and rear edges of the module frame 200.

A busbar frame 130 can be formed between the end plate 150 and the front and rear surfaces of the battery cell stack 120. A plurality of busbars 160 mounted on the busbar frame 130 can be formed protrusively from the battery cells 110 to come into contact with the electrode leads 140 mounted on the busbar frame 130. The busbar 160 may include a terminal busbar 160a and a sensing busbar 160b.

Conventional battery modules do not have a direct cooling path for the busbar, and thus, heat from the busbar was discharged only through a path continuing to the busbar, the electrode lead, the battery cell, the thermally conductive resin layer, and the bottom part of the module frame. However, in a situation in which the flow of a high current, such as fast charging causes the busbar to generate high heat in a short period of time, a cooling structure capable of minimizing the temperature rise of the busbar is required.

Therefore, referring to Figs. 4 and 6, the battery module 100 according to the present embodiment includes a first heat transfer member 500 that is formed between the busbar 160 and the battery cell stack 120. Further, the first heat transfer member 500 comes into contact with the module frame 200. In addition, the battery module 100 according to the present embodiment includes a first heat transfer pad 710 that is formed between the busbar 160 and the first heat transfer member 500 so as to come into contact with the busbar 160. At this time, components such as double-sided tape may be included instead of the first heat transfer pad 710.

Referring to Fig. 6, the battery module according to the present embodiment is formed so as to come into contact with the busbar 160, the first heat transfer pad 710, and the first heat transfer member 500 in this order. Therefore, heat generated from the busbar 160 is transferred to the first heat transfer member 500 through the first heat transfer pad 710. Further, as described above, since the first heat transfer member 500 comes into contact with the module frame 200, heat generated from the busbar 160 can be effectively discharged through the module frame 200.

Further, the first heat transfer pad 710 may not only be a component for heat transfer, but may also enable close contact between the first heat transfer member 500 and the busbar 160. As will be described later, the first heat transfer member 500 and the busbar 160, which are typically formed of a heat conductor, are difficult to adhere and fix only with both structures, but when the first heat transfer pad 710 is introduced between the first heat transfer member 500 and the busbar 160, all of the above structures can be adhesively fixed, and a stable cooling path can be secured. Therefore, the heat transfer pad 700 enables not only heat transfer but also stable coupling of each component, and thus can serve to form a stable cooling path.

At this time, the busbar 160 and the first heat transfer pad 710 come into surface contact, and the first heat transfer pad 710 and the first heat transfer member 500 come into surface contact. Therefore, the heat transfer path and the busbar cooling path as described above can be formed to thereby enable effective busbar cooling. In particular, the contact area can be increased through surface contact, thereby increasing the cooling efficiency.

The cooling structure simplifies the path and reduces the types of battery module components involved in the path as compared to a conventional cooling structure, thereby enabling quick and effective busbar cooling.

Referring to Fig. 5, the first heat transfer member 500 includes a first bent part 500a. At this time, the first bent part 500a is illustrated as having a gently curved shape, but is not limited thereto and may have a right-angled shape. At this time, centering on the first bent part 500a, each end of the first heat transfer member 500 may be formed so as to have a right angle, but is not limited thereto. As will be described later, depending on the role of the first heat transfer member 500 forming a cooling path between the busbar 160 and the upper plate 400, it is formed so as to correspond to an angle between the busbar 160 and the upper plate 400.

Referring back to Fig. 4, the first bent part 500a is bent so as to be adjacent to the upper plate 400 among the module frame 200. That is, the first bent part 500a is formed on the first heat transfer member 500 so as to be adjacent to the upper plate 400. At this time, a dotted line portion shown in the upper plate 400 of Fig. 4 indicates a region where the first heat transfer member 500 comes into contact with the module frame 200, i.e., the upper plate 400.

Furthermore, by forming the first bent part 500a as described above, one end of the first heat transfer member 500 can come into contact with the inside surface of the upper plate 400. Therefore, the area of the upper plate 400 with which the one end of the first heat transfer member 500 contacts may correspond to the size of the one end of the first heat transfer member 500.

The one end of the first heat transfer member 500 comes into contact with the upper plate 400, so that the heat transfer path continuing to the busbar 160, the first heat transfer pad 710 and the first heat transfer member 500 as described above is connected to the upper plate 400, and heat generated from the busbar 160 may be transferred to the outside of the battery module through the upper plate 400. Due to the structure in which heat is sequentially transmitted and discharged as described above, the heat of the busbar generated in high current conditions such as fast charging can be effectively discharged, and the stability of the battery module can be secured.

The first heat transfer member 500 according to the present embodiment is formed of a material having thermal conductivity, and more specifically, may be formed of a heat conductor. Further, the first heat transfer pad 710 according to the present embodiment may be formed of a material that is electrically insulating but thermally conductive. Therefore, the first heat transfer pad 710 may enable heat transfer while maintaining the insulation of the busbar 160, and enable heat transfer through the first heat transfer member 500. In particular, the first heat transfer member 500 may also be formed of a material having insulation property, if necessary.

At this time, the first heat transfer pad 710 and the first heat transfer member 500 may be formed considering the number of busbars 160 coming into contact with the first heat transfer pad 710 and the first heat transfer member 500, but are not limited thereto and may be formed in the number that maximizes the cooling of the busbar 160. Therefore, the first heat transfer pad 710 and the first heat transfer member 500 may be formed in plural numbers or in a single number in the battery module.

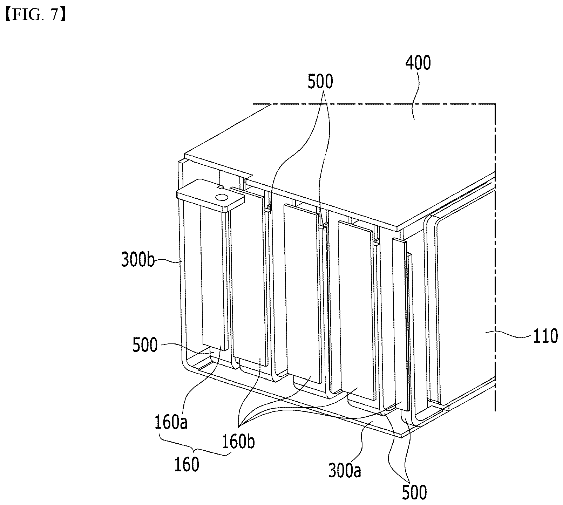

Next, a battery module according to the present disclosure will be described with reference to Fig. 7. Since there are contents that overlap with the contents described above, the contents different from the above contents will be mainly described.

Fig. 7 is a perspective view showing partial components of a battery module.

Referring to Fig. 7, the first heat transfer member 500 according to the present embodiment includes a first bent part 500a, wherein the first bent part 500a is bent so as to be adjacent to the bottom part 300a of the frame member 300.

That is, the first bent part 500a is formed on the first heat transfer member 500 so as to be adjacent to the bottom part 300a of the frame member 300. Therefore, the first heat transfer member 500 comes into contact with the frame member 300 among the module frame 200, and more specifically, it comes into contact with the bottom part 300a of the frame member 300.

Moreover, as the first bent part 500a is formed as described above, one end of the first heat transfer member 500 comes into contact with an inside lower end of the frame member 300. That is, one end of the first heat transfer member 500 comes into contact with the inside surface of the bottom part 300a of the frame member 300. Therefore, the area of the bottom part 300a of the frame member 300 with which the one end of the first heat transfer member 500 contacts may correspond to the size of the one end of the first heat transfer member 500.

At this time, the heat transfer path continuing to the busbar 160, the first heat transfer pad 710 and the first heat transfer member 500 as described above is connected to the bottom part 300a of the frame member 300, so that heat can be transferred to the outside of the battery module through the frame member 300.

Further, due to the structure in which heat is sequentially transmitted and discharged as described above, the heat of the busbar generated under high current conditions such as fast charging can be effectively discharged, and the stability of the battery module can be secured.

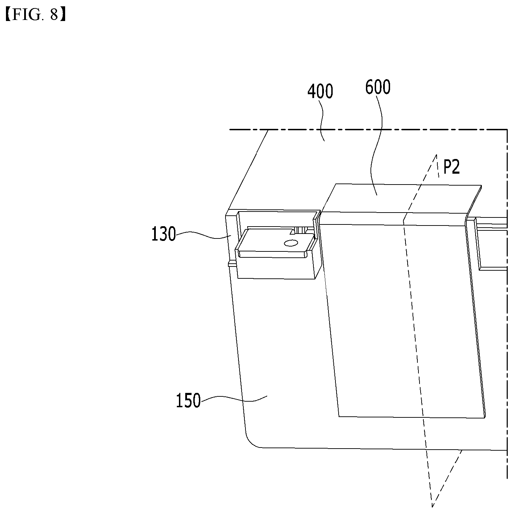

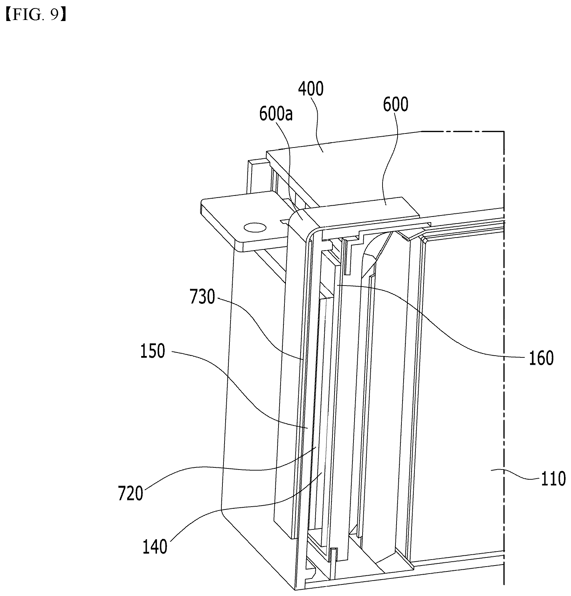

Next, a battery module according to the invention as defined by the annexed claim 1 will be described with reference to Figs. 8 and 9.

Fig. 8 is a perspective view showing partial components of a battery module. Fig. 9 is a cross-sectional view which shows a cross section taken along plane P2 of Fig. 8.

Referring to Figs. 8 and 9, the battery module includes a second heat transfer pad 720 that is formed between the inside surface of the end plate 150 and the busbar 160. Also, an electrode lead 140 is formed between the busbar 160 and the second heat transfer pad 720. The busbar 160 and the electrode lead 140 are components having the highest heat generation in fast charging situations, so that heat generated in the busbar 160 and the electrode lead 140 can be effectively transferred through second heat transfer pad 720.

In particular, the battery module according to the present disclosure includes a third heat transfer pad 730 that is formed so as to come into contact with the outside surface of the end plate 150, and includes a second heat transfer member 600 that is formed so as to come into contact with the third heat transfer pad 730. More specifically, the battery module according to the present disclosure includes a third heat transfer pad 730 in contact with the outside surface of the end plate 150m, and a second heat transfer member 720 that is formed so as to come into contact with the opposite surface of the third heat transfer pad 730 in contact with the outer surface of the end plate 150.

Heat transferred from the second heat transfer pad 720 is sequentially transferred through the end plate 150, the third heat transfer pad 730, and the second heat transfer member 600.

At this time, the second heat transfer member 600 according to the present embodiment includes a second bent part 600a that is bent in the direction of the upper plate 400. Therefore, one end of the second heat transfer member 600 may come into contact with the outside surface of the upper plate 400, and the upper plate 400 is included as a component of the present cooling path.

That is, an additional heat transfer path is formed through the second heat transfer member 600 in contact with the outer surface of the upper plate 400, so that the heat transferred from the busbar 160 is sequentially transferred through the second heat transfer pad 720, the end plate 150, the third heat transfer pad 730, the second heat transfer member 600, and the upper plate 400. The path transfers and cools a large amount of heat to the outside of the module in fast charging situations, thereby increasing the stability of the battery module itself.

Meanwhile, the second heat transfer member 600 may be formed so as to have a wider width than that of the first heat transfer member 500, but the width may be formed into a desired size within a range that maximizes cooling of the busbar.

Next, a battery pack according to another embodiment of the present disclosure will be described.

The battery pack according to the present embodiment includes the battery module described above. Also, it may further include a thermally conductive resin layer and a cooling plate located below the thermally conductive resin layer.

Therefore, as described above, the heat transferred from the busbar 160 to other components may be additionally transferred to the thermal conductive resin layer and the cooling plate. At this time, the thermally conductive resin layer and the cooling plate may be formed on both upper part and lower part of the battery module. Therefore, the heat generated by the busbar 160 is transferred and cooled through the thermal conductive resin layer and the cooling plate formed outside the battery module, thereby enabling effective cooling of a large amount of heat generated in fast charging situations.

In addition, the battery pack of the present disclosure may have a structure in which one or more of the battery modules according to the present embodiment are gathered, and packed together with a battery management system (BMS) and a cooling device that control and manage battery's temperature, voltage, etc.

The battery pack can be applied to various devices. Such a device can be applied to a vehicle means such as an electric bicycle, an electric vehicle, or a hybrid vehicle, but the present disclosure is not limited thereto, and is applicable to various devices that can use a battery module, which is also falls under the scope of the present disclosure.

The invention is defined by the appended claims.

### [Description of Reference Numerals]

- 100:: battery module
- 110:: battery cell
- 120:: battery cell stack
- 130:: busbar frame
- 140:: electrode lead
- 150:: end plate
- 160:: busbar
- 200:: module frame
- 300:: frame member
- 400:: upper plate
- 500:: first heat transfer member
- 600:: second heat transfer member
- 700:: heat transfer pad
- 710:: first heat transfer pad
- 720:: second heat transfer pad
- 730:: third heat transfer pad

## Claims

1. A battery module (100) comprising:
a battery cell stack (120) in which a plurality of battery cells (110) are stacked,
a module frame (200) that surrounds the battery cell stack (120),
a busbar (160) connected to an electrode lead (140) protruding from the battery cell (110), and
a first heat transfer member (500) formed between the busbar (160) and the battery cell stack (120),
a first heat transfer pad (710) formed between the busbar (160) and the first heat transfer member (500) so as come into contact with the busbar (160), and
end plates (150) covering the front and rear surfaces of the battery cell stack (120) that are opened in the module frame (200),
wherein the first heat transfer member (500) comes into contact with the module frame (200),
**characterized in that**:
the module frame (200) comprises a frame member (300) covering the lower part and both side parts of the battery cell stack (120), and an upper plate (400) covering an upper part of the battery cell stack (120), and
**in that** the battery module comprises:
a second heat transfer pad (720) formed between the inside surface of the end plate (150) and the busbar (160),
a third heat transfer pad (730) formed so as to come into contact with the outside surface of the end plate (150), and
a second heat transfer member (600) formed so as come into contact with the third heat transfer pad (730),
wherein one end of the second heat transfer member (600) comes into contact with the outside surface of the upper plate (400).

2. The battery module (100) according to claim 1 wherein:
the first heat transfer member (500) comprises a first bent part (500a).

3. The battery module (100) according to claim 2 wherein:
the first bent part (500a) is bent so as to be adjacent to the upper plate (400).

4. The battery module (100) according to claim 3 wherein:
one end of the first heat transfer member (500) comes into contact with the inside surface of the upper plate (400).

5. The battery module (100) according to claim 1 wherein:
the busbar (160) and the first heat transfer pad (710) come into surface contact, and
the first heat transfer pad (710) and the first heat transfer member (500) come into surface contact.

6. The battery module (100) according to claim 2 wherein:
the first bent part (500a) is bent so as to be adjacent to the bottom part (300a) of the frame member (300).

7. The battery module (100) according to claim 6 wherein:
one end of the first heat transfer member (500) comes into contact with an inner lower end of the frame member (300).

8. The battery module (100) according to claim 1 wherein:
the second heat transfer member (600) comprises a second bent part (600a) that is bent in the direction of the upper plate (400).

9. The battery module (100) according to claim 8 wherein:
heat transferred from the busbar (160) is sequentially transferred and discharged through the second heat transfer pad (720), the end plate (150), the third heat transfer pad (730), the second heat transfer member (720), and the upper plate (400).

10. A battery pack comprising the battery module (100) according to claim 1.

## Patentansprüche

1. Batteriemodul (100), umfassend:
einen Batteriezellstapel (120), in welchem eine Mehrzahl von Batteriezellen (110) gestapelt sind,
einen Modulrahmen (200), welcher den Batteriezellstapel (120) umgibt,
eine Sammelschiene (160), welche mit einer Elektrodenleitung (140) verbunden ist, welche aus der Batteriezelle (110) herausragt, und
ein erstes Wärmeübertragungselement (500), welches zwischen der Sammelschiene (160) und dem Batteriezellstapel (120) gebildet ist,
ein erstes Wärmeübertragungspad (710), welches zwischen der Sammelschiene (160) und dem ersten Wärmeübertragungselement (500) derart gebildet ist, dass es mit der Sammelschiene (160) in Kontakt kommt, und
Endplatten (150), welche die vorderen und hinteren Flächen des Batteriezellstapels (120) abdecken, welche in dem Modulrahmen (200) geöffnet sind,
wobei das erste Wärmeübertragungselement (500) mit dem Modulrahmen (200) in Kontakt kommt,
**dadurch gekennzeichnet, dass**:
der Modulrahmen (200) ein Rahmenelement (300), welches den unteren Teil und beide Seitenteile des Batteriezellstapels (120) abdeckt, und eine obere Platte (400) umfasst, welche einen oberen Teil des Batteriezellstapels (120) abdeckt, und
dass das Batteriemodul umfasst:
ein zweites Wärmeübertragungspad (720), welches zwischen der Innenfläche der Endplatte (150) und der Sammelschiene (160) gebildet ist,
ein drittes Wärmeübertragungspad (730), welches derart gebildet ist, dass es mit der Außenfläche der Endplatte (150) in Kontakt kommt, und
ein zweites Wärmeübertragungselement (600), welches derart gebildet ist, dass es mit dem dritten Wärmeübertragungspad (730) in Kontakt kommt,
wobei ein Ende des zweiten Wärmeübertragungselements (600) mit der Außenfläche der oberen Platte (400) in Kontakt kommt.

2. Batteriemodul (100) nach Anspruch 1, wobei:
das erste Wärmeübertragungselement (500) einen ersten gebogenen Teil (500a) umfasst.

3. Batteriemodul (100) nach Anspruch 2, wobei:
der erste gebogene Teil (500a) derart gebogen ist, dass er an die obere Platte (400) angrenzt.

4. Batteriemodul (100) nach Anspruch 3, wobei:
ein Ende des ersten Wärmeübertragungselements (500) mit der Innenfläche der oberen Platte (400) in Kontakt kommt.

5. Batteriemodul (100) nach Anspruch 1, wobei:
die Sammelschiene (160) und das erste Wärmeübertragungspad (710) in Flächenkontakt kommen und
das erste Wärmeübertragungspad (710) und das erste Wärmeübertragungselement (500) in Flächenkontakt kommen.

6. Batteriemodul (100) nach Anspruch 2, wobei:
der erste gebogene Teil (500a) derart gebogen ist, dass er an den unteren Teil (300a) des Rahmenelements (300) angrenzt.

7. Batteriemodul (100) nach Anspruch 6, wobei:
ein Ende des ersten Wärmeübertragungselements (500) mit einem inneren unteren Ende des Rahmenelements (300) in Kontakt kommt.

8. Batteriemodul (100) nach Anspruch 1, wobei:
das zweite Wärmeübertragungselement (600) einen zweiten gebogenen Teil (600a) umfasst, welcher in die Richtung der oberen Platte (400) gebogen ist.

9. Batteriemodul (100) nach Anspruch 8, wobei:
von der Sammelschiene (160) übertragene Wärme sequenziell durch das zweite Wärmeübertragungspad (720), die Endplatte (150), das dritte Wärmeübertragungspad (730), das zweite Wärmeübertragungselement (720) und die obere Platte (400) übertragen und abgegeben wird.

10. Batteriepack, umfassend das Batteriemodul (100) nach Anspruch 1.

## Revendications

1. Module de batterie (100) comprenant :
un empilement d'éléments de batterie (120) dans lequel une pluralité d'éléments de batterie (110) sont empilés,
un cadre de module (200) qui entoure l'empilement d'éléments de batterie (120),
une barre omnibus (160) connectée à un fil d'électrode (140) faisant saillie depuis l'élément de batterie (110), et
un premier organe de transfert de chaleur (500) formé entre la barre omnibus (160) et l'empilement d'éléments de batterie (120),
un premier patin de transfert de chaleur (710) formé entre la barre omnibus (160) et le premier organe de transfert de chaleur (500) de manière à entrer en contact avec la barre omnibus (160), et
des plaques d'extrémité (150) recouvrant les surfaces avant et arrière de l'empilement d'éléments de batterie (120) qui s'ouvrent dans le cadre de module (200),
dans lequel le premier organe de transfert de chaleur (500) entre en contact avec le cadre de module (200),
**caractérisé en ce que** :
le cadre de module (200) comprend un organe de cadre (300) recouvrant la partie inférieure et les deux parties latérales de l'empilement d'éléments de batterie (120), et une plaque supérieure (400) recouvrant une partie supérieure de l'empilement d'éléments de batterie (120), et
**en ce que** le module de batterie comprend : un deuxième patin de transfert de chaleur (720) formé entre la surface intérieure de la plaque d'extrémité (150) et la barre omnibus (160),
un troisième patin de transfert de chaleur (730) formé de manière à entrer en contact avec la surface extérieure de la plaque d'extrémité (150), et
un second organe de transfert de chaleur (600) formé de manière à entrer en contact avec le troisième patin de transfert de chaleur (730),
dans lequel une extrémité du second organe de transfert de chaleur (600) entre en contact avec la surface extérieure de la plaque supérieure (400).

2. Module de batterie (100) selon la revendication 1, dans lequel :
le premier organe de transfert de chaleur (500) comprend une première partie courbée (500a).

3. Module de batterie (100) selon la revendication 2, dans lequel :
la première partie courbée (500a) est courbée de manière à être adjacente à la plaque supérieure (400).

4. Module de batterie (100) selon la revendication 3, dans lequel :
une extrémité du premier organe de transfert de chaleur (500) entre en contact avec la surface intérieure de la plaque supérieure (400).

5. Module de batterie (100) selon la revendication 1, dans lequel :
la barre omnibus (160) et le premier patin de transfert de chaleur (710) entrent en contact superficiel, et
le premier patin de transfert de chaleur (710) et le premier organe de transfert de chaleur (500) entrent en contact superficiel.

6. Module de batterie (100) selon la revendication 2, dans lequel :
la première partie courbée (500a) est courbée de manière à être adjacente à la partie de fond (300a) de l'organe de cadre (300).

7. Module de batterie (100) selon la revendication 6, dans lequel :
une extrémité du premier organe de transfert de chaleur (500) entre en contact avec une extrémité inférieure interne de l'organe de cadre (300).

8. Module de batterie (100) selon la revendication 1, dans lequel :
le second organe de transfert de chaleur (600) comprend une seconde partie courbée (600a) qui est courbée dans la direction de la plaque supérieure (400).

9. Module de batterie (100) selon la revendication 8, dans lequel :
de la chaleur transférée depuis la barre omnibus (160) est transférée et évacuée séquentiellement à travers le deuxième patin de transfert de chaleur (720), la plaque d'extrémité (150), le troisième patin de transfert de chaleur (730), le second organe de transfert de chaleur (720) et la plaque supérieure (400).

10. Bloc-batterie comprenant le module de batterie (100) selon la revendication 1.
